# EUROPÄISCHE PATENTSCHRIFT

(11) **EP 2 487 512 B1**
(45) Veröffentlichungstag und Bekanntmachung des Hinweises auf die Patenterteilung: **22.04.2015**
(21) Anmeldenummer: 12150065.6
(22) Anmeldetag: 03.01.2012
(51) Int. Cl.: G01V 8/20

(54) **Verfahren zum Betrieb eines Lichtgitters und Lichtgitter**
Light grid and method for operating a light grid
Procédé destiné au fonctionnement d'une grille lumineuse et grille lumineuse

(30) Priorität: 14.02.2011 DE 102011011187
(43) Veröffentlichungstag der Anmeldung: 15.08.2012
(73) Patentinhaber: Sick AG, 79183 Waldkirch (DE)
(72) Erfinder: Dreher, Felix, 79189 Bad Krozingen (DE)
(74) Vertreter: Westphal, Mussgnug & Partner Patentanwälte mbB

(56) Entgegenhaltungen:
- EP-A1- 1 870 734
- EP-A1- 2 226 656

## Beschreibung

Die Erfindung betrifft ein Lichtgitter gemäß dem Oberbegriff des Patentanspruchs 1 und ein Verfahren zum Betrieb eines Lichtgitters gemäß dem Oberbegriff des Patentanspruchs 5.

Allgemein bekannt sind Lichtgitter, bei welchen ein Schutzfeld durch zwei einander parallel gegenüberliegende Sende-/Empfangsleisten definiert wird, wobei die in der einen Sende-/Empfangsleiste in deren Erstreckungsrichtung angeordneten Sendeeinheiten Lichtstrahlen aussenden, die von entsprechenden in der zweiten Sende-/Empfangsleiste in deren Erstreckungsrichtung angeordneten Empfangseinheiten empfangen werden. Bei den Sende-/Empfangsleisten im Sinne dieser Anmeldung handelt es sich also um elektrische Geräte, die Sende- und/oder Empfangseinheiten und oft, aber nicht zwingend auch eine Ansteuer- und/oder Auswerte-Elektronik aufweisen, deren Geometrie so ausgestaltet ist, dass sie ein Schutzfeld definieren, wenn sie, insbesondere in paralleler Ausrichtung, einander gegenübergestellt sind.

Die Unterbrechung mindestens eines der Lichtstrahlen signalisiert das Vorhandensein eines Objektes im Schutzfeld. Falls ein nicht zugelassenes Objekt in dem Schutzfeld des Lichtgitters vorhanden ist, wird eine Sicherheitsfunktion ausgelöst, z.B. ein Alarm ausgelöst, eine gefährdende Produktionsmaschine abgeschaltet oder dergleichen. Anwendungen sind z.B. die Zugangssicherung von automatischen Fertigungsanlagen, die Absicherung von Einfahrtsöffnungen zu Fertigungszellen, die Absicherung von Abkantpressen und Palettieranlagen, die Transporttechnik, die Förder- und Lagertechnik, die Verpackungsindustrie, der Maschinenbau und die Automobilindustrie.

Der Nachweis eines Gegenstandes im Schutzfeld des Lichtgitters beruht darauf, dass es zu einer Reduktion des Sollwertes eines Energieeintrages in eine gegebene Empfangseinheit kommt, weil der Gegenstand im Lichtstrahl die Empfangseinheit abschattet. Man führt daher eine Schaltbedingung für das Empfängersignal ein, insbesondere eine Schaltschwelle, bei deren Unterschreitung ein Schaltprozess ausgelöst wird, der anzeigt, dass ein Gegenstand in das Lichtgitter eingedrungen ist, was ggf. zum Auslösen einer Sicherheitsfunktion führt.

Naturgemäß muss in sicherheitsrelevanten Anwendungen vermieden werden, dass durch eine andere Lichtquelle ein zusätzlicher Energieeintrag in eine gegebene Empfangseinheit erfolgt, da dieser zusätzliche Energieeintrag dazu führen könnte, dass die Schaltschwelle nicht mehr unterschritten wird, obwohl sich eigentlich ein Objekt im Strahlengang befindet, das zum Auslösen der Sicherheitsfunktion führen müsste.

Es ist üblich, derartige Sensoranordnungen so zu betreiben, dass idealerweise jeweils nur ein Paar, bestehend aus einer Sende- und einer zugeordneten Empfangseinheit, aktiviert ist. Um das gesamte Schutzfeld zu überwachen, erfolgt also ein sequentieller Scan, in dessen Verlauf die einzelnen Paare von Sende- und Empfangseinheiten nacheinander aktiviert werden, wobei nur dann, wenn stets gegenüberliegende Sender und Empfänger gleichzeitig aktiv sind, ein rechteckiges Schutzfeld durchgängiger Auflösung erzeugt werden kann.

EP1870734 A1 offenbart ein Verfahren zum Betrieb eines Lichtgitters wohin die Sende und Empfangselemente in einer festen Reihenfolge nacheinander angesteuert sind.

Aus der Perspektive der Anlagenplanung, Montage, Lagerhaltung und Fertigung ist es unbefriedigend, dass derart aufgebaute Lichtgitter stets zwei verschieden bestückte und angesteuerte Sende-/Empfangsleisten von Sendern und Empfängern aufweisen, also nicht baugleich sind. Wünschenswert wäre es unter diesen Gesichtspunkten, Lichtgitter mit baugleichen Sende-/Empfangsleisten, also zwei in wesentlichen Teilen identischen Geräten darzustellen, die damit jeweils sowohl Sende- als auch Empfangseinheiten besitzen.

Ein aus dem Stand der Technik bekanntes Lichtgitter, das diesen Gedanken aufgreift, ist der miniTwin-Lichtvorhang der Sick AG. Die Sende-/Empfangsleisten sind dabei so aufgebaut, dass sie mittig in einen Senderbereich und einen Empfängerbereich aufgeteilt sind. Mit anderen Worten ist die eine Hälfte der Sende-/Empfangsleisten jeweils mit Sendern und die andere Hälfte der Sende-/Empfangsleisten jeweils mit Empfängern bestückt. Die Steuerelektronik ist dabei so ausgestaltet, dass sowohl Sender als auch Empfänger von der Lichtgittermitte ausgehend sequentiell aktiviert werden.

Eine derartige hälftige Teilung ist aber für Zeilenkamera-artige Anwendungen, z.B. Blanking, Reduced-Resolution-Techniken und weitergehende Objekterkennung und -überwachung, und im Allgemeinen für alle Verfahren, bei denen eines der beiden Geräte alle Strahldaten für eine Auswertung benötigt problematisch. Entweder müssen mit hohem Aufwand die Strahldaten auf einem anderen als dem optischen Weg ausgetauscht werden oder es ist hinzunehmen, dass die Überdeckung einer Lichtgitterhälfte, z.B. durch ein einfahrendes zugelassenes Objekt, zu einer vollständigen Unterbrechung des Datenaustauschs in der einen Richtung führt, was algorithmisch gravierende Probleme darstellt. Auch fertigungstechnisch und im Hinblick auf die Herstellungskosten ist der für die hälftige Teilung sinnvolle Mittelabgriff an der durch Sendeeinheiten und Empfangseinheiten einer Sende-/Empfangsleiste gebildeten Optikkette nachteilig.

Ausgehend von aus dem Stand der Technik bekannten Lichtgittern mit baugleichen Sende-/Empfangsleisten und deren Betrieb stellt sich also die Aufgabe, ein Verfahren zum Betrieb eines Lichtgitters mit baugleichen Sende-/Empfangsleisten und ein Lichtgitter mit baugleichen Sende-/Empfangsleisten bereitzustellen, das die Verwendung eines einfachen und kostengünstig herzustellenden Lichtgitters auch für Anwendungen, bei denen eine der Sende-/Empfangsleisten alle Strahldaten für eine Auswertung benötigt, insbesondere für Zeilenkamera-artige Anwendungen, ermöglicht.

Diese Aufgabe wird gelöst durch ein Verfahren zum Betrieb eines Lichtgitters mit den Merkmalen des Anspruchs 1 und ein Lichtgitter mit den Merkmalen des Anspruchs 5.

Vorteilhafte Ausführungen und Weiterbildungen der Erfindung sind in den jeweils rückbezogenen Unteransprüchen angegeben.

Das erfindungsgemäße Verfahren zum Betrieb eines Lichtgitters geht von einem Lichtgitter mit einem Schutzfeld aus, das von einer ersten Sende-/Empfangsleiste und einer zweiten Sende-/Empfangsleiste begrenzt ist. Bei den Sende-/Empfangsleisten im Sinne dieser Anmeldung handelt es sich also um elektrische Geräte, die Sende- und/oder Empfangseinheiten und oft, aber nicht zwingend, auch eine Ansteuer- und/oder Auswertelektronik aufweisen, deren Geometrie so ausgestaltet ist, dass sie, wenn sie einander gegenübergestellt sind, ein Schutzfeld definieren. Die erste Sende-/Empfangsleiste und die zweite Sende-/Empfangsleiste weisen jeweils mindestens eine erste Gruppe mit mindestens einer Sendeeinheit und mindestens eine zweite Gruppe mit mindestens einer Empfangseinheit auf, wobei die Gruppen benachbart zueinander und alternierend in einer Reihe angeordnet sind. Ferner besitzt das zu betreibende Lichtgitter mindestens eine Steuer- und Auswerte-Elektronik, die in einer oder beiden Sende-/Empfangsleisten angeordnet sein kann, aber auch als separate Baugruppe realisiert sein kann.

Ferner sind die erste Sende-/Empfangsleiste und die zweite Sende-/Empfangsleiste räumlich so angeordnet, dass einer Sendeeinheit der ersten Sende-/Empfangsleiste eine Empfangseinheit der zweiten Sende-/Empfangsleiste gegenüberliegt, die mit dieser ein Paar bildet, und einer Empfangseinheit der ersten Sende-/Empfangsleiste jeweils eine Sendeeinheit der zweiten Sende-/Empfangsleiste gegenüberliegt, die mit dieser ein Paar bildet. Um Missverständnissen vorzubeugen wird explizit darauf hingewiesen, dass diese Bedingung nicht der Baugleichheit entgegensteht, sondern, wie unten anhand der Figuren verdeutlicht wird, durch die Orientierung der ersten und der zweiten Sende-/Empfangsleiste relativ zueinander realisiert werden kann.

Erfindungsgemäß weist das Verfahren die Schritte des Durchführen eines Scans auf der ersten Sende-/Empfangsleiste durch sequentielles Aktivieren der auf der ersten Sende-/Empfangsleiste angeordneten Sende- und Empfangseinheiten durch mindestens eine Steuer- und Auswerte-Elektronik und des Durchführens eines Scans auf der zweiten Sende-/Empfangsleiste durch sequentielles Aktivieren der auf der zweiten Sende-/Empfangsleiste angeordneten Sende- und Empfangseinheiten durch mindestens eine Steuer- und Auswerte-Elektronik und des Auswertens von beim Scan gewonnenen Daten auf. Es werden also nacheinander die auf den jeweiligen Sende-/Empfangsleisten angeordneten Sende- und Empfangselemente aktiviert, wobei der Scan auf der ersten Liste und der Scan auf der zweiten Sende-/Empfangsleiste derart miteinander synchronisiert werden, dass bei jedem Paar die dazu gehörenden, einander gegenüberliegenden Sende- und Empfangseinheiten zu mindestens einem Zeitpunkt gleichzeitig aktiviert sind.

Wesentlich für die Erfindung ist dabei, dass der Scan auf der ersten Sende-/Empfangsleiste und der Scan auf der zweiten Sende-/Empfangsleiste jeweils so durchgeführt werden, dass eine erste Richtung vorgegeben ist, in der aufeinander folgende Sendeeinheiten auf jeder Sende-/Empfangsleiste jeweils nacheinander aktiviert werden, wobei die dazwischen liegenden Gruppen mit mindestens einer Empfangseinheit übersprungen werden und dass aufeinander folgende Empfangseinheiten auf jeder Sende-/Empfangsleiste jeweils nacheinander in einer dazu entgegengesetzten zweiten Richtung aktiviert werden, wobei die dazwischen liegenden Gruppen mit mindestens einer Sendeeinheit übersprungen werden.

Der Erfindung liegt die Erkenntnis zugrunde, dass eine Sende-/Empfangsleiste dann insbesondere sowohl als erste als auch als zweite das überwachte Schutzfeld begrenzende Sende-/Empfangsleiste eingesetzt werden kann, wenn alternierend angeordnete Gruppen mit mindestens einer Sende- oder Empfangseinheit beim Scan in unterschiedlicher Richtung durchlaufen werden. Dies gilt insbesondere, wenn der Abstand zwischen den jeweiligen Sende- und Empfangseinheiten auf der Sende-/Empfangsleiste immer gleich ist.

Vorteilhafterweise ist die Anzahl der Sendeeinheiten in der ersten Gruppe und die Anzahl der Empfangseinheiten in der zweiten Gruppe identisch.

In einer bevorzugten Ausführungsform der Erfindung werden während des Scans erst nacheinander alle Sendeeinheiten einer Sende-/Empfangsleiste aktiviert und dann nacheinander alle Empfangseinheiten dieser Sende-/Empfangsleiste aktiviert oder umgekehrt. Dies ermöglicht insbesondere, der Reihe nach alle Einheiten zu durchlaufen, was zu einem Verfahren führt, das besonders geringe Anforderungen an die Lichtgitter-Hardware stellt.

Besonders vorteilhaft ist es, wenn der Scan auf der ersten Sende-/Empfangsleiste mit dem Scan auf der zweiten Sende-/Empfangsleiste so synchronisiert ist, dass der eine Scan die erste angesteuerte Sendeeinheit aktiviert, wenn der andere Scan die erste angesteuerte Empfangseinheit aktiviert.

Das erfindungsgemäße Lichtgitter weist ein Schutzfeld auf, das von einer ersten Sende-/Empfangsleiste und einer zweiten Sende-/Empfangsleiste begrenzt ist, wobei die erste Sende-/Empfangsleiste und die zweite Sende-/Empfangsleiste jeweils mindestens eine erste Gruppe mit mindestens einer Sendeeinheit und mindestens eine zweite Gruppe mit mindestens einer Empfangseinheit aufweisen, wobei die Gruppen benachbart zueinander und alternierend in einer Reihe angeordnet sind. Ferner ist mindestens eine Steuer- und Auswerte-Elektronik vorhanden. Dabei sind die erste Sende-/Empfangsleiste und die zweite Sende-/Empfangsleiste räumlich so angeordnet, dass einer Sendeeinheit der ersten Sende-/Empfangsleiste eine Empfangseinheit der zweiten Sende-/Empfangsleiste gegenüberliegt, die mit dieser ein Paar bildet, und einer Empfangseinheit der ersten Sende-/Empfangsleiste jeweils eine Sendeeinheit der zweiten Sende-/Empfangsleiste gegenüberliegt, die mit dieser ein Paar bildet.

Ferner sind die erste Sende-/Empfangsleiste und die zweite Sende-/Empfangsleiste so ausgestaltet, dass ein Scan auf der ersten Sende-/Empfangsleiste durch sequentielles Aktivieren der auf der ersten Sende-/Empfangsleiste angeordneten Sende-und Empfangseinheiten durch mindestens eine Steuer- und Auswerte-Elektronik durchführbar ist und dass ein Scan auf der zweiten Sende-/Empfangsleiste durch sequentielles Aktivieren der auf der zweiten Sende-/Empfangsleiste angeordneten Sende-und Empfangseinheiten durch mindestens eine Steuer- und Auswerte-Elektronik durchführbar ist. Die mindestens eine Steuer-und Auswerte- Elektronik muss dabei so ausgelegt sein, dass der Scan auf der ersten Sende-/Empfangsleiste und der Scan auf der zweiten Sende-/Empfangsleiste derart miteinander synchronisierbar sind, dass bei jedem Paar die Sende- und die Empfangseinheit wenigstens zu einem Zeitpunkt gleichzeitig aktiviert werden.

Erfindungswesentlich ist dabei, dass die Sendeeinheiten der ersten Sende-/Empfangsleiste und die Sendeeinheiten der zweiten Sende-/Empfangsleiste und die Empfangseinheiten der ersten Sende-/Empfangsleiste und die Empfangseinheiten der zweiten Sende-/Empfangsleiste jeweils derart miteinander verschaltet sind, dass auf den Sende-/Empfangsleisten jeweils eine erste Richtung vorgegeben ist, in der aufeinander folgende Sendeeinheiten nacheinander aktiviert werden, wobei die dazwischen liegenden Gruppen mit mindestens einer Empfangseinheit übersprungen werden und dass vorgegeben ist, dass aufeinander folgende Empfangseinheiten derselben Sende-/Empfangsleiste nacheinander in der dazu entgegengesetzten zweiten Richtung aktiviert werden, wobei die dazwischen liegenden Gruppen mit mindestens einer Sendeeinheit übersprungen werden.

Vorzugsweise sind die Anzahl der Sendeeinheiten in der ersten Gruppe und die Anzahl der Empfangseinheiten in der zweiten Gruppe identisch.

Eine besonders einfache, hardwarebasierte Realisierung der Erfindung erhält man, wenn die Sendeeinheiten der ersten Sende-/Empfangsleiste und die Sendeeinheiten der zweiten Sende-/Empfangsleiste und die Empfangseinheiten der ersten Sende-/Empfangsleiste und die Empfangseinheiten der zweiten Sende-/Empfangsleiste jeweils als eine Daisy Chain miteinander verschaltet sind.

Eine besonders einfache und kostengünstige Realisierung dieses Gedankens sieht vor, dass bei der ersten Sende-/Empfangsleiste und bei der zweiten Sende-/Empfangsleiste jeweils entweder die letzte Sendeeinheit der Daisy Chain der Sendeeinheiten mit der ersten Empfangseinheit der Daisy Chain der Empfangseinheiten oder die letzte Empfangseinheit der Daisy Chain der Empfangseinheiten mit der ersten Sendeeinheit der Daisy Chain der Sendeeinheiten so verbunden ist, dass die jeweiligen Daisy Chains ineinander übergehen oder mit anderen Worten eine gemeinsame Daisy Chain bilden. Dadurch kann vermieden werden, dass separate Rückführungsleitungen für die erste und die zweite Daisy Chain vorgesehen werden müssen. Ferner wird ein Übersprechen zwischen Sendeeinheits-Ansteuerleitungen mit hohen Strömen in räumlicher Nähe zu den sensiblen Empfangseinheit-Signalleitungen durch die zeitliche Trennung der Ansteuerung von Sende- und Empfangseinheiten dabei vollständig vermieden.

Vorzugsweise sind die erste Sende-/Empfangsleiste und die zweite Sende-/Empfangsleiste baugleich und weisen jeweils Sendeeinheiten und Empfangseinheiten auf, die benachbart zueinander und alternierend in einer Reihe angeordnet sind. Durch die Verwendung von baugleichen Sende-/Empfangsleisten kann ein Lichtgitter kostengünstig hergestellt werden.

Im Folgenden wird die Erfindung anhand der beigefügten Zeichnungen näher erläutert. Es zeigt
- Fig. 1: eine schematische Darstellung eines Lichtgitters entsprechend einer ersten Ausführungsform der Erfindung,
- Fig. 2: eine schematische Darstellung eines Lichtgitters entsprechend einer zweiten Ausführungsform der Erfindung und
- Fig. 3: eine schematische Darstellung eines Lichtgitters entsprechend einer dritten Ausführungsform der Erfindung.

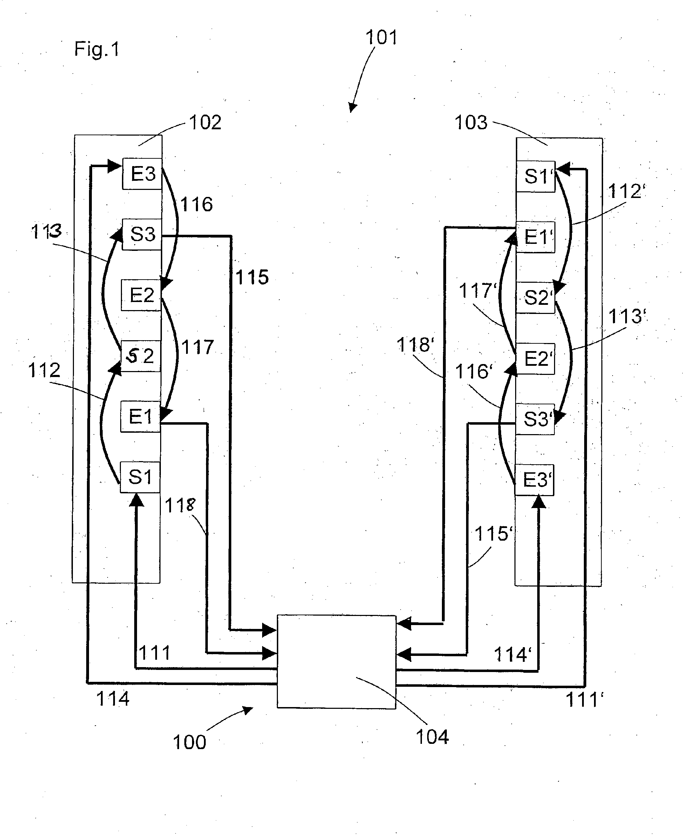

Figur 1 zeigt ein Lichtgitter 100 gemäß einer ersten Ausführungsform der Erfindung mit einem Schutzfeld 101, das durch eine erste Sende-/Empfangsleiste 102 und eine zweite Sende-/Empfangsleiste 103 begrenzt wird. Die erste Sende-/Empfangsleiste 102 weist drei erste Gruppen mit mindestens einer Sendeeinheit S1, S2, S3 und drei zweite Gruppen mit mindestens einer Empfangseinheit E1, E2, E3 auf, wobei die Gruppen benachbart zueinander und alternierend in einer Reihe angeordnet sind.

Es ist möglich, dass in jeder der ersten Gruppen unterschiedliche viele Sendeeinheiten und in jeder der zweiten Gruppen unterschiedliche viele Empfangseinheiten angeordnet sind. Insbesondere sind jedoch die Anzahlen der Sendeeinheiten in den ersten Gruppen gleich den Anzahlen der Empfangseinheiten in den entsprechenden zweiten Gruppen.

Vorliegend weist jede der ersten Gruppen genau eine Sendeeinheit und jede der zweiten Gruppen genau eine Empfangseinheit auf. Die erste Sende-/Empfangsleiste 102 weist somit Sendeeinheiten S1, S2, S3 und Empfangseinheiten E1, E2, E3 auf, die alternierend angeordnet sind, so dass auf eine Sendeeinheit S1, S2, S3 jeweils eine Empfangseinheit E1, E2, E3 folgt. Mit anderen Worten folgt aus der alternierenden Anordnung, dass ausgehend von der Sendeeinheit S1 die nächste folgende Sendeeinheit die Sendeeinheit S2 ist und dass dazwischen die Empfangseinheit E1 angeordnet ist.

Die zweite Sende-/Empfangsleiste 103 weist Sendeeinheiten S1′, S2′, S3′ und Empfangseinheiten E1′, E2′, E3′ auf, die in gleicher Weise alternierend angeordnet sind. Die erste Sende-/Empfangsleiste 102 und die zweite Sende-/Empfangsleiste 103 sind baugleich, aber so im Raum angeordnet, dass jeweils einer Sendeeinheit S1, S2, S3 der ersten Sende-/Empfangsleiste 102 eine Empfangseinheit E1′, E2′, E3′ der zweiten Sende-/Empfangsleiste 103 gegenüberliegt und jeweils einer Empfangseinheit E1, E2, E3 der ersten Sende-/Empfangsleiste 102 eine Sendeeinheit S1′, S2′, S3′ der zweiten Sende-/Empfangsleiste 103 gegenüber liegt. Jeweils einander gegenüberliegende Sendeeinheiten S1, S2, S3, S1′, S2′, S3′ und Empfangseinheiten E3′, E2′, E1′, E3, E2, E1 bilden Paare, im Beispiel der Figur 1 sind dies also die Paare E1-S3′, S3-E1′, E2-S2′, S2-E2′, E3-S1′ und S1-E3′. Die Sende- und Empfangseinheit eines der Paare sollten im Betrieb gleichzeitig angesteuert werden, so dass ein von der jeweiligen Sendeeinheit bei Aktivierung ausgesandter Lichtstrahl von der jeweiligen zugehörigen Empfangseinheit, die durch Aktivierung detektionsbereit gemacht wird, nachgewiesen werden kann, um den sicheren Betrieb eines Lichtgitters mit rechteckigem Schutzfeld und konstanter Auflösung zu ermöglichen.

Ferner ist eine -hier als externe Baugruppe ausgeführte- Auswerte- und Steuerelektronik 104 dargestellt, die aber auch in die erste Sende-/Empfangsleiste 102 oder die zweite Sende-/Empfangsleiste 103 integriert ausgebildet sein kann.

Mit den Pfeilen 111, 111′, 112, 112′, 113, 113′, 114, 114′, 115, 115′, 116, 116′, 117, 117′, 118 und 118′ wird schematisch die Abfolge der Ansteuerung der Sendeeinheiten und Empfangseinheiten dargestellt. Sie dienen zugleich als schematische Darstellung der nicht separat dargestellten Signal- und/oder Datenleitungen, die die mit Pfeilen verbundenen Baugruppen verbinden. Nicht separat dargestellt ist somit insbesondere die Verschaltung der Steuer- und Auswerteeinheit 104 mit den Sendeeinheiten S1, S2 und S3 in der Abfolge der Pfeile 111, 112, 113, 115 als erste Daisy Chain, mit den Sendeeinheiten S1′, S2′ und S3′ in der Abfolge der Pfeile 111′, 112′, 113′, 115′ als zweite Daisy Chain, mit den Empfangseinheiten E3, E2 und E1 in der Abfolge der Pfeile 114, 116, 117, 118 als dritte Daisy Chain und mit den Empfangseinheiten E3′, E2′ und E1′ in der Abfolge der Pfeile 114′, 116′, 117′ und 118′ als vierte Daisy Chain.

Wesentlich für die Erfindung ist insbesondere, dass abgesehen von den Verbindungen von und zur Auswerte- und Steuerelektronik 111, 111′, 114, 114′, 115, 115′, 118, 118′ die Verbindungen bzw. die Verschaltung zwischen den Sende- und Empfangseinheiten der ersten Sende-/Empfangsleiste 102 und der zweiten Sende-/Empfangsleiste 103 mit den Bezugszeichen 112, 112′, 113, 113, 116, 116′ und 117, 117′ in einer derartigen Symmetrie ausgebildet sind, dass sie mit baugleichen Sende-/Empfangsleisten 102, 103 realisiert werden können, wie man leicht dadurch verifiziert, dass in Figur 1 die Sende-/Empfangsleisten 102, 103 durch eine Drehung um 180 Grad in der Papierebene und Verschiebung ineinander überführt werden können.

Die Daisy Chains einer Sende-/Empfangsleiste können insbesondere unter Nutzung einer gemeinsamen Clock-Leitung angesteuert werden.

Bei einer derartigen Ansteuerung würden aktiviert:
- im ersten Schritt das Paar aus Sendeeinheit S1 über die Ansteuerung 111 und Empfangseinheit E3' über die Ansteuerung 114' sowie gleichzeitig oder zeitverzögert das Paar aus Sendeeinheit S1′ über die Ansteuerung 111' und die Empfangseinheit E3 über die Ansteuerung 114.
- im zweiten Schritt das Paar aus Sendeeinheit S2 über die Ansteuerung 112 und Empfangseinheit E2' über die Ansteuerung 116' sowie gleichzeitig oder zeitverzögert das Paar aus Sendeeinheit S2'über die Ansteuerung 112' und die Empfangseinheit E2 über die Ansteuerung 116.
- im dritten Schritt das Paar aus Sendeeinheit S3 über die Ansteuerung 113 und Empfangseinheit E1' über die Ansteuerung 117' sowie gleichzeitig oder zeitverzögert das Paar aus Sendeeinheit S3'über die Ansteuerung 113' und die Empfangseinheit E1 über die Ansteuerung 117.
- im vierten Schritt wird das Steuersignal dann über die Ansteuerungen 115, 115', 118 und 118' wieder an die Steuer-und Auswerteeinheit 104 übergeben, so dass eine Sicherheits-Überprüfung durch die Steuer- und Auswerteeinheit 104 durchgeführt werden kann, da wegen der sicherheitsrelevanten Einsatzfelder für Lichtgitter eine Rückkopplung des Steuersignals und etwaig ausgelesener Daten zur Auswerte- und Steuerelektronik 103 wichtig ist.

Bei einer alternativen Ansteuerung würden aktiviert:
- im ersten Schritt das Paar aus Sendeeinheit S1 über die Ansteuerung 111 und Empfangseinheit E3′ über die Ansteuerung 114′,
- im zweiten Schritt das Paar aus Sendeeinheit S2 über die Ansteuerung 112 und Empfangseinheit E2′ über die Ansteuerung 116′,
- im dritten Schritt das Paar aus Sendeeinheit S3 über die Ansteuerung 113 und Empfangseinheit E1′ über die Ansteuerung 117′,
- im vierten Schritt wird das Steuersignal dann über die Ansteuerungen 115 und 118′ wieder an die Steuer- und Auswerteeinheit 104 übergeben,
- im fünften Schritt das Paar aus Sendeeinheit S1′ über die Ansteuerung 111′ und die Empfangseinheit E3 über die Ansteuerung 114,
- im sechsten Schritt das Paar aus Sendeeinheit S2′ über die Ansteuerung 112′ und die Empfangseinheit E2 über die Ansteuerung 116,
- im siebten Schritt das Paar aus Sendeeinheit S3′ über die Ansteuerung 113′ und die Empfangseinheit E1 über die Ansteuerung 117,
- im achten Schritt wird das Steuersignal dann über die Ansteuerungen 115′ und 118 wieder an die Steuer- und Auswerteeinheit 104 übergeben,
- wobei im vierten und/oder im achten Schritt eine Sicherheits-Überprüfung durch die Steuer- und Auswerteeinheit 104 durchgeführt werden kann, da wegen der sicherheitsrelevanten Einsatzfelder für Lichtgitter eine Rückkopplung des Steuersignals und etwaig ausgelesener Daten zur Auswerte- und Steuerelektronik 103 wichtig ist.

Es werden also unter Verwendung baugleicher Sende-/Empfangsleisten 102, 103 in einem Zyklus nacheinander die Paare von Sende- und Empfangseinheiten aktiviert.

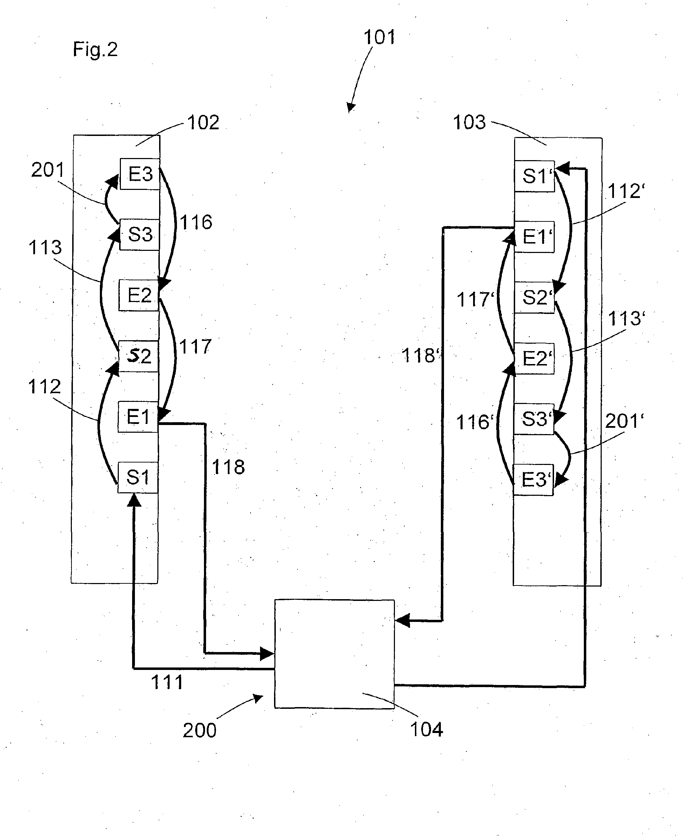

Figur 2 zeigt ein Lichtgitter 200 gemäß einer zweiten Ausführungsform der vorliegenden Erfindung. Der einzige wesentliche Unterschied zur Ausführungsform nach Figur 1 liegt in der Art der Ansteuerung und Verschaltung, weshalb dieselben Bezugszeichen wie in Figur 1 verwendet werden und nur die die neu hinzugekommenen Pfeile 201, 201' mit neuen Bezugszeichen gekennzeichet sind. In der Ausführungsform nach Figur 2 sind in jeder der Sende-/Empfangsleisten 102, 103 die Daisy Chains der Sendeeinheiten S1, S2, S3 bzw. S1', S2', S3' und der Empfangseinheiten E1, E2, E3 bzw. E1', E2', E3' auf einer Sende-/Empfangsleiste 102, 103 jeweils miteinander über die Pfeile 201, 201'verbunden, werden also in einem Zyklus nacheinander durchlaufen. Dadurch, dass die Ansteuerung bzw. Verschaltung 201 von der letzten Sendeeinheit S3 der ersten Sende-/Empfangsleiste 102 zur letzten Empfangseinheit E3 der ersten Sende-/Empfangsleiste 102 führt, ist sichergestellt, dass in der so gebildeten Daisy-Chain die Sendeeinheiten S1, S2, S3 der ersten Sende-/Empfangsleiste 102 in entgegengesetzter Richtung wie die Empfangseinheiten E3, E2, E1 der ersten Sende-/Empfangsleiste 102 aktiviert werden. In gleicher Weise wird dadurch dass die Ansteuerung bzw. Verschaltung 201' von der letzten Sendeeinheit S3′ der zweiten Sende-/Empfangsleiste 103 zur letzten Empfangseinheit E3' der zweiten Sende-/Empfangsleiste 103 führt, ist sichergestellt, dass in der so gebildeten Daisy-Chain die Sendeeinheiten S1', S2', S3' der zweiten Sende-/Empfangsleiste 103 in entgegengesetzter Richtung wie die Empfangseinheiten E3', E2', E1' der zweiten Sende-/Empfangsleiste 103 betrieben werden. Bei der Ansteuerung derart gebildeter gemeinsamer Daisy Chains für Sende- und Empfangseinheiten der Sende-/Empfangsleisten 102, 103 ist allerdings zu beachten, dass sie mit einem Phasenversatz betrieben werden müssen, der so gewählt ist, dass die zuerst angesteuerte Sendeeinheit der ersten Sende-/Empfangsleiste 102 dann angesteuert wird, wenn die zuerst angesteuerte Empfangseinheit der zweiten Sende-/Empfangsleiste 102 angesteuert wird, damit weiterhin die Sende- und Empfangseinheiten paarweise aktiviert werden.

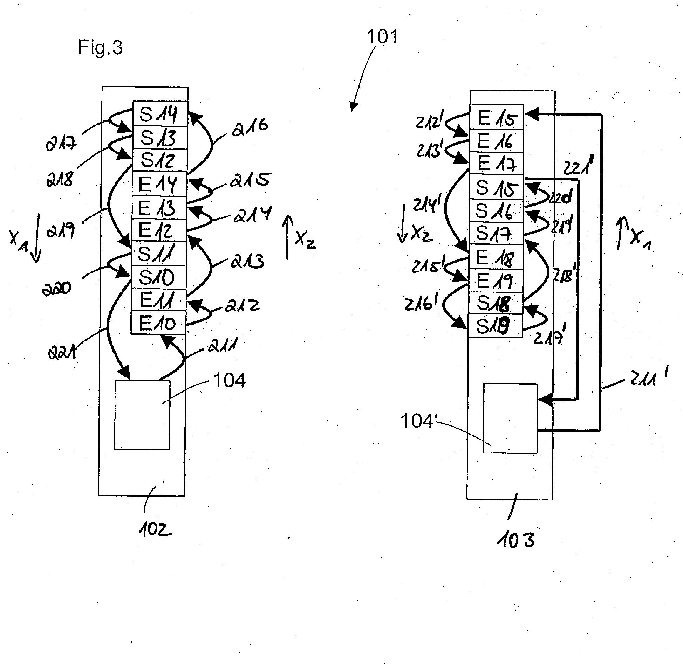

Figur 3 zeigt ein Lichtgitter 300 gemäß einer dritten Ausführungsform der vorliegenden Erfindung mit zwei Sende-/Empfangsleisten 102, 103. Ein Unterschied zu dem ersten und zweiten Ausführungsbeispiel liegt darin, dass in jede der Sende-/Empfangsleisten 102, 103 jeweils eine Steuer- und Auswerteeinheit 104, 104' angeordnet ist. Das dritte Ausführungsbeispiel verdeutlicht weiterhin, dass die beiden Sende-/Empfangsleisten 102, 103 nicht zwingend baugleich ausgeführt sein müssen und zudem die ersten und zweiten Gruppen von Sende- und Empfangseinheiten mehrere und unterschiedliche viele Sende- und Empfangseinheiten aufweisen können.

Die erste Sende-/Empfangsleiste 102 weist zwei erste Gruppen mit Sendeeinheiten S10, S11, S12, S13, S14 auf, wobei eine der ersten Gruppen zwei Sendeeinheiten S10, S11 und die andere der ersten Gruppen drei Sendeeinheiten S12, S13, S14 aufweist. Weiterhin weist die erste Sende-/Empfangsleiste 102 zwei zweite Gruppen mit Empfangseinheiten E10, E11, E12, E13, E14 auf, wobei eine der ersten Gruppen zwei Empfangseinheiten E10, E11 und die andere der ersten Gruppen drei Empfangseinheiten E12, E13, E14 aufweist. Die ersten Gruppen und zweiten Gruppen sind benachbart zueinander und alternierend in einer Reihe angeordnet, so dass sich insgesamt die Reihenfolge E10, E11, S10, S11, E12, E13, E14, S12, S13, S14 an Sende- und Empfangseinheiten in der ersten Sende-/Empfangsleiste 102 ergibt. Die Empfangseinheiten E10, E11, E12, E13, E14 sind über die Pfeile 212, 213, 214, 215 zu einer Daisy Chain verbunden, wobei die erste Empfangseinheit E10 über den Pfeil 211 von der Steuer-und Auswerteeinheit 104 angesteuert wird. Die Sendeeinheiten S10, S11, S12, S13, S14 sind in der Reihenfolge S14, S13, S12, S11, S10 über die Pfeile 217, 218, 219, 220 zu einer Daisy Chain verbunden. Dabei ist die letze Empfangseinheit E14 der Daisy-Chain der Empfangseinheiten E10, E11, E12, E13, E14 mit der ersten Sendeeinheit S14 der Daisy Chain der Sendeeinheiten S10, S11, S12, S13, S14 verbunden, insbesondere wie mittels des Pfeils 216 dargestellt, so dass auf der ersten Sende-/Empfangsleiste 102 eine einzige Daisy Chain vorliegt. Über die Ansteuerung 221 wird das Signal von der letzten Sendeeinheit S10 der Daisy Chain wieder an die Steuer- und Auswerteeinheit 104 übergeben. Dabei werden die Empfangseinheiten E10, E11, E12, E13, E14 in einer zweiten Richtung x2 nacheinander folgend angesteuert, wobei die dazwischen liegenden Gruppen von Sendeeinheiten S10, S11, S12, S13, S14 übersprungen werden, und anschließend werden die Sendeeinheiten S14, S13, S12, S11, S10 in einer zu der zweiten Richtung x2 entgegengesetzten ersten Richtung x1 entlang der ersten Sende-/Empfangsleiste 102 nacheinander folgend angesteuert, wobei die dazwischen liegenden Gruppen von Empfangseinheiten E10, E11, E12, E13, E14 übersprungen werden.

Die zweite Sende-/Empfangsleiste 103 weist zwei erste Gruppen mit Sendeeinheiten S15, S16, S17, S18, S19 auf, wobei eine der ersten Gruppen zwei Sendeeinheiten S18, S19 und die andere der ersten Gruppen drei Sendeeinheiten S15, S16, S17 aufweist. Weiterhin weist die zweite Sende-/Empfangsleiste 103 zwei zweite Gruppen mit Empfangseinheiten E15, E16, E17, E18, E19 auf, wobei eine der ersten Gruppen zwei Empfangseinheiten E18, E19 und die andere der ersten Gruppen drei Empfangseinheiten E15, E16, E17 aufweist. Die ersten Gruppen und zweiten Gruppen sind benachbart zueinander und alternierend in einer Reihe angeordnet, so dass sich insgesamt die Reihenfolge S19, S18, E19, E18, S17, S16, S15, E17, E16, E15 an Sende- und Empfangseinheiten in der ersten Sende-/Empfangsleiste 103 ergibt. Die Empfangseinheiten E15, E16, E17, E18, E19 sind über die Pfeile 212', 213', 214', 215' zu einer Daisy Chain verbunden, wobei die erste Empfangseinheit E10 über den Pfeil 211' von der Steuer- und Auswerteeinheit 104' angesteuert wird. Die Sendeeinheiten S15, S16, S17, S18, S19 sind in der Reihenfolge S19, S18, S17, S16, S15 über die Pfeile 217', 218', 219', 220' zu einer Daisy Chain verbunden. Dabei ist die letze Empfangseinheit E19 der Daisy-Chain der Empfangseinheiten E15, E16, E17, E18, E19 mit der ersten Sendeeinheit S19 der Daisy Chain der Sendeeinheiten S15, S16, S17, S18, S19 verbunden, insbesondere wie mittels des Pfeils 216' dargestellt, so dass auf der zweiten Sende-/Empfangsleiste 103 eine einzige Daisy Chain vorliegt. Über die Ansteuerung 221' wird das Signal von der letzten Sendeeinheit S15 der Daisy Chain wieder an die Steuer- und Auswerteeinheit 104' übergeben. Dabei werden die Empfangseinheiten E15, E16, E17, E18, E19 in einer zweiten Richtung x2 nacheinander folgend angesteuert, wobei die dazwischen liegenden Gruppen von Sendeeinheiten S15, S16, S17, S18, S19 übersprungen werden; und anschließend werden die Sendeeinheiten S19, S18, S17, S16, S15 in einer zu der zweiten Richtung x2 entgegengesetzten ersten Richtung x1 entlang der zweiten Sende-/Empfangsleiste 103 nacheinander folgend angesteuert, wobei die dazwischen liegenden Gruppen von Empfangseinheiten E15, E16, E17, E18, E19 übersprungen werden.

Die Sende-/Empfangsleisten 102, 103 sind derart zueinander ausgerichtet, dass einer Sendeeinheit jeweils eine Empfangseinheit gegenüberliegt, so dass Paare von Sende- und Empfangseinheiten gebildet werden, vorliegend die Paare E10-S19, E11-S18, S10-E19, S11-E18, E12-S17, E13-S16, E14-S15, S12-E17, S13-E16 und S14-E15. Damit die Sende- und Empfangseinheiten eines Paars zeitgleich aktiviert werden, werden die Scans in den Sende-/Empfangsleisten 102, 103 phasenversetzt durchgeführt, insbesondere derart, dass der eine Scan auf der ersten Sende-/Empfangsleiste 102 die erste angesteuerte Empfangseinheit E10 aktiviert, wenn der andere Scan auf der zweiten Sende-/Empfangsleiste 103 die erste angesteuerte Sendeeinheit S19 aktiviert.

### Bezugszeichenliste

- 100, 200: Lichtgitter
- 101: Schutzfeld
- 102: erste Sende-/Empfangsleiste
- 103: zweite Sende-/Empfangsleiste
- 104, 104′: Steuer- und Auswerte-Elektronik
- S1, S2, S3, S1′, S2′, S3′: Sendeeinheit
- S10 - S19: Sendeeinheit
- E1, E2, E3, E1′, E2′, E3′: Empfangseinheit
- E10 - E19: Empfangseinheit
- 111-118, 111′-118′, 201,: 201' Pfeile (repräsentierend Ansteuerung und Verschaltung)
- 211-221, 211′-221′: Pfeile (repräsentierend Ansteuerung und Verschaltung)
- x1, x2: Richtung

## Patentansprüche

1. Verfahren zum Betrieb eines Lichtgitters (100, 200) mit einem Schutzfeld (101), das von einer ersten Sende-/Empfangsleiste (102) und einer zweiten Sende-/Empfangsleiste (103) begrenzt ist, wobei die erste Sende-/Empfangsleiste (102) und die zweite Sende-/Empfangsleiste (103) Sende- und Empfangseinheiten in mindestens zwei ersten Gruppen mit mindestens einer Sendeeinheit (S1, S1', S2, S2', S3, S3') und in mindestens zwei zweiten Gruppen mit mindestens einer Empfangseinheit (E1, E1', E2, E2', E3, E3') aufweisen, wobei die Gruppen benachbart zueinander und alternierend in einer Reihe angeordnet sind, und mit mindestens einer Steuer- und Auswerte-Elektronik (104),
wobei ferner die erste Sende-/Empfangsleiste (102) und die zweite Sende-/Empfangsleiste (103) räumlich so angeordnet sind, dass einer Sendeeinheit (S1, S2, S3) der ersten Sende-/Empfangsleiste (102) eine Empfangseinheit (E3', E2', E1') der zweiten Sende-/Empfangsleiste (103) gegenüberliegt, die mit dieser ein Paar bildet, und einer Empfangseinheit (E1, E2, E3) der ersten Sende-/Empfangsleiste (102) jeweils eine Sendeeinheit (S3',S2',S1') der zweiten Sende-/Empfangsleiste (103) gegenüberliegt, die mit dieser ein Paar bildet, mit den Schritten:
- Durchführen eines Scans auf der ersten Sende-/Empfangsleiste (102) durch sequentielles Aktivieren der auf der ersten Sende-/Empfangsleiste (102) angeordneten Sende- (S1, S2, S3) und Empfangseinheiten (E1, E2, E3) durch mindestens eine Steuer- und Auswerte-Elektronik (104) und
- Durchführen eines Scans auf der zweiten Sende-/Empfangsleiste (103) durch sequentielles Aktivieren der auf der zweiten Sende-/Empfangsleiste (103) angeordneten Sende- (S1', S2', S3') und Empfangseinheiten (E1', E2', E3') durch mindestens eine Steuer- und Auswerte-Elektronik (104), wobei der Scan auf der ersten Sende-/Empfangsleiste (102) und der Scan auf der zweiten Sende-/Empfangsleiste (103) derart miteinander synchronisiert werden, dass bei jedem Paar die Sende- und die Empfangseinheit zu mindestens einem Zeitpunkt gleichzeitig aktiviert sind und
- Auswerten von beim Scan gewonnenen Daten
**dadurch gekennzeichnet,**
**dass** der Scan auf der ersten Sende-/Empfangsleiste (102) und der Scan auf der zweiten Sende-/Empfangsleiste (103) jeweils so durchgeführt werden, dass auf den Sende-/Empfangsleisten (102, 103) jeweils eine erste Richtung (x1) vorgegeben ist , in der aufeinander folgende Sendeeinheiten (S1, S2, S3, S1', S2', S3') auf der ersten Sende-/Empfangsleiste (102) und der zweiten Sende-/Empfangsleiste (103) jeweils nacheinander aktiviert werden, wobei die dazwischen liegenden Gruppen mit wenigstens einer Empfangseinheit (E1, E2, E3) übersprungen werden und dass aufeinander folgende Empfangseinheiten (E3, E2, E1, E3', E2', E1') auf der ersten Sende-/Empfangsleiste (102) und der zweiten Sende-/Empfangsleiste (103) jeweils nacheinander in der dazu entgegengesetzten zweiten Richtung (x2) aktiviert werden, wobei die dazwischen liegenden Gruppen mit mindestens einer Sendeeinheit (S1, S2, S3, S1', S2', S3') übersprungen werden.

2. Verfahren nach Anspruch 1,
**dadurch gekennzeichnet,**
**dass** die Anzahl der Sendeeinheiten und die Anzahl der Empfangseinheiten in jeder Gruppe identisch sind.

3. Verfahren nach Anspruch 1 oder 2,
**dadurch gekennzeichnet,**
**dass** während des Scans erst nacheinander alle Sendeeinheiten (S1, S2, S3, S1', S2', S3') einer Sende-/Empfangsleiste (102, 103) aktiviert werden und dann nacheinander alle Empfangseinheiten (E1 E2, E3, E1', E2', E3') dieser Sende-/Empfangsleiste (102, 103) aktiviert werden öder umgekehrt.

4. Verfahren nach Anspruch 3,
**dadurch gekennzeichnet,**
**dass** der Scan auf der ersten Sende-/Empfangsleiste (102) mit dem Scan auf der zweiten Sende-/Empfangsleiste (103) so synchronisiert ist, dass der eine Scan die erste angesteuerte Sendeeinheit (S1, S1') aktiviert, wenn der andere Scan die erste angesteuerte Empfangseinheit (E3', E3) aktiviert.

5. Lichtgitter (100, 200) mit einem Schutzfeld (101), das von einer ersten Sende-/Empfangsleiste (102) und einer zweiten Sende-/Empfangsleiste (103) begrenzt ist, wobei die erste Sende-/Empfangsleiste (102) und die zweite Sende-/Empfangsleiste (103) Sende- und Empfangseinheiten in mindestens zwei ersten Gruppen mit mindestens einer Sendeeinheit (S1, S1' S2, S2', S3, S3') und in mindestens zwei zweiten Gruppen mit mindestens einer Empfangseinheit (E1, E1', E2, E2', E3, E3') aufweisen, wobei die Gruppen benachbart zueinander und alternierend in einer Reihe angeordnet sind, und mit mindestens einer Steuer- und Auswerte-Elektronik (104),
wobei ferner die erste Sende-/Empfangsleiste (102) und die zweite Sende-/Empfangsleiste (103) räumlich so angeordnet sind, dass einer Sendeeinheit (S1, S2, S3) der ersten Sende-/Empfangsleiste (102) eine Empfangseinheit (E3', E2', E1') der zweiten Sende-/Empfangsleiste (103) gegenüberliegt, die mit dieser ein Paar bildet, und einer Empfangseinheit (E1, E2, E3) der ersten Sende-/Empfangsleiste (102) jeweils eine Sendeeinheit (S3', S2', S1') der zweiten Sende-/Empfangsleiste (103) gegenüberliegt, die mit dieser ein Paar bildet, und wobei ferner die erste Sende-/Empfangsleiste (102) und die zweite Sende-/Empfangsleiste (103) so ausgestaltet sind, dass ein Scan auf der ersten Sende-/Empfangsleiste (102) durch sequentielles Aktivieren der auf der ersten Sende-/Empfangsleiste (102) angeordneten Sende- (S1, S2, S3) und Empfangseinheiten (E1, E2, E3) durch mindestens eine Steuer- und Auswerte-Elektronik (104) durchführbar ist und dass ein Scan auf der zweiten Sende-/Empfangsleiste (103) durch sequentielles Aktivieren der auf der zweiten Sende-/Empfangsleiste (103) angeordneten Sende- (S1, S2, S3) und Empfangseinheiten (E1, E2, E3) durch mindestens eine Steuer- und Auswerte-Elektronik (104) durchführbar ist, wobei die mindestens eine Steuer- und Auswerte- Elektronik (104) so ausgelegt ist, dass der Scan auf der ersten Sende-/Empfangsleiste (102) und der Scan auf der zweiten Sende-/Empfangsleiste (103) derart miteinander synchronisierbar sind, dass bei jedem Paar die Sende-(S1, S1', S2, S2', S3, S3') und die Empfangseinheit (E3, E3', E2, E2', E1, E1') wenigstens zu einem Zeitpunkt gleichzeitig aktiviert sind,
**dadurch gekennzeichnet,**
**dass** die Sendeeinheiten (S1, S2, S3) der ersten Sende-/Empfangsleiste (102) und die Sendeeinheiten (S1', S2', S3') der zweiten Sende-/Empfangsleiste (103) und die Empfangseinheiten (E1, E2, E3) der ersten Sende-/Empfangsleiste (102) und die Empfangseinheiten (E1', E2', E3') der zweiten Sende-/Empfangsleiste (103) jeweils derart miteinander verschaltet sind, dass auf den Sende-/Empfangsleisten (102, 103) jeweils eine erste Richtung (x1) vorgegeben ist, in der aufeinander folgende Sendeeinheiten (S1, S2, S3, S1', S2', S3') nacheinander aktiviert werden, wobei die dazwischen liegenden Gruppe von Empfangseinheiten (E1, E2, E3, E1', E2', E3') übersprungen wird und dass vorgegeben ist, dass aufeinander folgende Empfangseinheiten (E3, E2, E1, E3', E2', E1') derselben Sende-/Empfangsleiste nacheinander in der dazu entgegengesetzten zweiten Richtung (x2) aktiviert werden, wobei dazwischen liegende Gruppen von Sendeeinheiten (S1, S2, S3, S1', S2', S3') übersprungen werden.

6. Lichtgitter nach Anspruch 5,
**dadurch gekennzeichnet,**
**dass** die Anzahl der Sendeeinheiten und die Anzahl der Empfangseinheiten identisch sind.

7. Lichtgitter nach Anspruch 5 oder 6,
**dadurch gekennzeichnet, dass** die Sendeeinheiten (S1, S2, S3) der ersten Sende-/Empfangsleiste (102) und die Sendeeinheiten (S1', S2', S3') der zweiten Sende-/Empfangsleiste (103) und die Empfangseinheiten (E3, E2, E1) der ersten Sende-/Empfangsleiste (102) und die Empfangseinheiten (E3', E2', E1') der zweiten Sende-/Empfangsleiste (103) jeweils als eine Daisy Chain miteinander verschaltet sind.

8. Lichtgitter nach Anspruch 7,
**dadurch gekennzeichnet, dass** bei der ersten Sende-/Empfangsleiste (102) und bei der zweiten Sende-/Empfangsleiste (103) jeweils entweder die letzte Sendeeinheit (S3, S3') der Daisy Chain der Sendeeinheiten (S1, S2, S3, S1', S2', S3') mit der ersten Empfangseinheit (E3, E3') der Daisy Chain der Empfangseinheiten (E3, E2, E1, E3', E2', E1') oder die letzte Empfangseinheit (E1, E1') der Daisy Chain der Empfangseinheiten (E3, E2, E1, E3', E2', E1') mit der ersten Sendeeinheit (S1, S1') der Daisy Chain der Sendeeinheiten (S1, S1', S2, S2', S3, S3') so verbunden ist, dass die jeweiligen Daisy Chains ineinander übergehen, so dass auf jeder Sende-/Empfangsleiste (102, 103) jeweils eine einzige Daisy-Chain vorliegt.

9. Lichtgitter nach einem der Anspruch 5 oder 8,
**dadurch gekennzeichnet, dass** die erste Sende-/Empfangsleiste (102) und die zweite Sende-/Empfangsleiste (103) baugleich und jeweils Sendeeinheiten (S1, S1', S2, S2', S3, S3') und Empfangseinheiten (E1, E2, E3, E1', E2', E3') aufweisen, die benachbart zueinander und alternierend in einer Reihe angeordnet sind.

## Claims

1. Method for operating a light grille (100, 200) with a protection field (101) which is limited by a first transmitter/receiver strip (102) and a second transmitter/receiver strip (103), wherein the first transmitter/receiver strip (102) and the second transmitter/receiver strip (103) have transmitter and receiver units in at least two first groups with at least one transmitter unit (S1, S1', S2, S2', S3, S3') and in at least two second groups with at least one receiver unit (E1, E1', E2, E2', E3, E3'), wherein the groups are arranged adjacent to one another and alternating in a row, and with at least one electronic control and evaluation unit (104),
wherein furthermore the first transmitter/receiver strip (102) and the second transmitter/receiver strip (103) are spatially arranged such that lying opposite a transmitter unit (S1, S2, S3) of the first transmitter/receiver strip (102) is a receiver unit (E3', E2', E1') of the second transmitter/receiver strip (103), which forms a pair with it, and lying opposite a receiver unit (E1, E2, E3) of the first transmitter/receiver strip (102) in each case is a transmitter unit (S3', S2', S1') of the second transmitter/receiver strip (103), which forms a pair with it, with the steps:
- execution of a scan on the first transmitter/receiver strip (102) through sequential activation of the transmitter (S1, S2, S3) and receiver units (E1, E2, E3) arranged on the first transmitter/receiver strip (102) by at least one electronic control and evaluation unit (104) and
- execution of a scan on the second transmitter/receiver strip (103) through sequential activation of the transmitter (S1', S2', S3') and receiver units (E1', E2', E3') arranged on the second transmitter/receiver strip (103) by at least one electronic control and evaluation unit (104), wherein the scan on the first transmitter/receiver strip (102) and the scan on the second transmitter/receiver strip (103) are synchronised with one another such that for each pair, the transmitter unit and the receiver unit are activated at the same time at at least one point in time and
- evaluation of data obtained from the scan **characterised in that**
the scan on the first transmitter/receiver strip (102) and the scan on the second transmitter/receiver strip (103) are respectively carried out such that on the transmitter/receiver strips (102, 103) in each case a first direction (x1) is specified, in which consecutive transmitter units (S1, S2, S3, S1', S2', S3') on the first transmitter/receiver strip (102) and the second transmitter/receiver strip (103) are respectively activated one after another, wherein the groups with at least one receiver unit (E1, E2, E3) lying in between them are skipped and that consecutive receiver units (E3, E2, E1, E3', E2', E1') on the first transmitter/receiver strip (102) and the second transmitter/receiver strip (103) are respectively activated one after another in the opposite second direction (x2), wherein the groups with at least one transmitter unit (S1, S2, S3, S1', S2', S3') lying in between them are skipped.

2. Method according to claim 1,
**characterised in that**
the number of transmitter units and the number of receiver units in each group are identical.

3. Method according to claim 1 or 2,
**characterised in that**
during the scan, firstly all transmitter units (S1, S2, S3, S1', S2', S3') of a transmitter/receiver strip (102, 103) are activated one after another and then all receiver units (E1, E2, E3, E1', E2', E3') of this transmitter/receiver strip (102, 103) are activated one after another, or vice versa.

4. Method according to claim 3,
**characterised in that**
the scan on the first transmitter/receiver strip (102) is synchronised with the scan on the second transmitter/receiver strip (103) such that the one scan activates the first triggered transmitter unit (S1, S1') when the other scan activates the first triggered receiver unit (E3', E3).

5. Light grille (100, 200) with a protection field (101) which is limited by a first transmitter/receiver strip (102) and a second transmitter/receiver strip (103), wherein the first transmitter/receiver strip (102) and the second transmitter/receiver strip (103) have transmitter and receiver units in at least two first groups with at least one transmitter unit (S1, S1', S2, S2', S3, S3') and in at least two second groups with at least one receiver unit (E1, E1', E2, E2', E3, E3'), wherein the groups are arranged adjacent to one another and alternating in a row, and with at least one electronic control and evaluation unit (104), wherein furthermore the first transmitter/receiver strip (102) and the second transmitter/receiver strip (103) are spatially arranged such that lying opposite a transmitter unit (S1, S2, S3) of the first transmitter/receiver strip (102) is a receiver unit (E3', E2', E1') of the second transmitter/receiver strip (103), which forms a pair with it, and lying opposite a receiver unit (E1, E2, E3) of the first transmitter/receiver strip (102) respectively is a transmitter unit (S3', S2', S1') of the second transmitter/receiver strip (103), which forms a pair with it, and wherein furthermore the first transmitter/receiver strip (102) and the second transmitter/receiver strip (103) are designed such that a scan on the first transmitter/receiver strip (102) can be carried out through sequential activation of the transmitter (S1, S2, S3) and receiver units (E1, E2, E3) arranged on the first transmitter/receiver strip (102) by at least one electronic control and evaluation unit (104), and that a scan on the second transmitter/receiver strip (103) can be carried out through sequential activation of the transmitter (S1, S2, S3) and receiver units (E1, E2, E3) arranged on the second transmitter/receiver strip (103) by at least one electronic control and evaluation unit (104), wherein the at least one electronic control and evaluation unit (104) is designed such that the scan on the first transmitter/receiver strip (102) and the scan on the second transmitter/receiver strip (103) can be synchronised with one another such that for each pair, the transmitter unit (S1, S1', S2, S2', S3, S3') and the receiver unit (E3, E3', E2, E2', E1, E1') can be activated simultaneously at at least one point in time, **characterised in that**
the transmitter units (S1, S2, S3) of the first transmitter/receiver strip (102) and the transmitter units (S1', S2', S3') of the second transmitter/receiver strip (103) and the receiver units (E1, E2, E3) of the first transmitter/receiver strip (102) and the receiver units (E1', E2', E3') of the second transmitter/receiver strip (103) are respectively connected to one another such that on the transmitter/receiver strips (102, 103) in each case a first direction (x1) is specified in which consecutive transmitter units (S1, S2, S3, S1', S2', S3') are activated one after another, wherein the group of receiver units (E1, E2, E3, E1', E2', E3') lying in between are skipped, and that it is specified that consecutive receiver units (E3, E2, E1, E3', E2', E1') of the same transmitter/receiver strip are activated one after another in the opposite second direction (x2), wherein groups of transmitter units (S1, S2, S3, S1', S2', S3') lying in between are skipped.

6. Light grille according to claim 5,
**characterised in that**
the number of transmitter units and the number of receiver units are identical.

7. Light grille according to claim 5 or 6, **characterised in that** the transmitter units (S1, S2, S3) of the first transmitter/receiver strip (102) and the transmitter units (S1', S2', S3') of the second transmitter/receiver strip (103) and the receiver units (E3, E2, E1) of the first transmitter/receiver strip (102) and the receiver units (E3', E2', E1') of the second transmitter/receiver strip (103) are respectively connected to one another as a daisy chain.

8. Light grille according to claim 7,
**characterised in that** in the case of the first transmitter/receiver strip (102) and in the case of the second transmitter/receiver strip (103) in each case either the last transmitter unit (S3, S3') of the daisy chain of transmitter units (S1, S2, S3, S1" S2', S3') is connected to the first receiver unit (E3, E3') of the daisy chain of receiver units (E3, E2, E1, E3', E2', E1'), or the last receiver unit (E1, E1') of the daisy chain of receiver units (E3, E2, E1, E3', E2', E1') is connected to the first transmitter unit (S1, S1') of the daisy chain of transmitter units (S1, S1', S2, S2', S3, S3'), such that the respective daisy chains merge into one another, so that on each transmitter/receiver strip (102, 103) there is in each case a single daisy chain.

9. Light grille according to one of the claims 5 or 8, **characterised in that** the first transmitter/receiver strip (102) and the second transmitter/receiver strip (103) are of identical construction and respectively have transmitter units (S1, S1', S2, S2', S3, S3') and receiver units (E1, E2, E3, E1', E2', E3') that are arranged adjacent to one another and alternating in a row.

## Revendications

1. Procédé de gestion d'une grille lumineuse (100, 200) comportant un champ de protection (101) qui est limité par une première baguette d'émission/réception (102) et par une seconde baguette d'émission/réception (103), la première baguette d'émission/réception (102) et la seconde baguette d'émission/réception (103) comportant des unités d'émission et des unités de réception réparties dans au moins deux premiers groupes comprenant au moins une unité d'émission (S1, S1', S2, S2', S3, S3') et dans au moins deux seconds groupes comprenant au moins une unité de réception (E1, E1', E2, E2', E3, E3'), ces groupes étant situés au voisinage les uns des autres et répartis en alternance sur une rangée, ainsi qu'au moins une électronique de commande et d'exploitation (104),
la première baguette d'émission/réception (102) et la seconde baguette d'émission/réception (103) étant en outre positionnées dans l'espace de sorte qu'une unité d'émission (S1, S2, S3) de la première baguette d'émission/réception (102) soit située en regard d'une unité de réception (E3', E2', E1') de la seconde baguette d'émission/réception (103) pour former une paire, et une unité de réception (E1, E2, E3) de la première baguette d'émission/réception (102) étant respectivement située en regard d'une unité d'émission (S3', S2', S1') de la seconde baguette d'émission/réception (103) pour former une paire, ce procédé comprenant les étapes consistant à :
- effectuer un balayage sur la première baguette d'émission/réception (102) par activation séquentielle des unités d'émission (S1, S2, S3) et des unités de réception (E1, E2, E3) situées sur la première baguette d'émission/réception (102) par au moins une électronique de commande et d'exploitation (104), et
- effectuer un balayage sur la seconde baguette d'émission/réception (103) par activation séquentielle des unités d'émission (S1', S2', S3') et des unités de réception (E1', E2', E3') situées sur la seconde baguette d'émission/réception (103) par au moins une électronique de commande et d'exploitation (104), le balayage réalisé sur la première baguette d'émission/réception (102) et le balayage réalisé sur la seconde baguette d'émission/réception (103) étant synchronisés de sorte que, dans chaque paire, l'unité d'émission et l'unité de réception soient activées simultanément à au moins un instant, et
- exploiter les données issues du balayage,
**caractérisé en ce que**
le balayage réalisé sur la première baguette d'émission/réception (102) et le balayage réalisé sur la seconde baguette d'émission/réception (103) sont respectivement mis en oeuvre de façon à définir respectivement, sur les baguettes d'émission/réception (102, 103) une première direction (x1) dans laquelle des unités d'émission (S1, S2, S3, S1', S2', S3') se succédant sur la première baguette d'émission/réception (102) et sur la seconde baguette d'émission/réception (103) sont respectivement activées les unes après les autres, les groupes intermédiaires comprenant au moins une unité de réception (E1, E2, E3) étant sautés, et que des unités de réception (E3, E2, E1, E3', E2', E1') se succédant sur la première baguette d'émission/réception (102) et sur la seconde baguette d'émission/réception (103) soient respectivement activées les unes après les autres dans la seconde direction (x2) opposée à la première, les groupes intermédiaires comprenant au moins une unité d'émission (S1, S2, S3, S1', S2', S3') étant sautées.

2. Procédé conforme à la revendication 1,
**caractérisé en ce que**
dans chaque groupe le nombre d'unités d'émission et le nombre d'unités de réception sont identiques.

3. Procédé conforme à la revendication 1 ou 2,
**caractérisé en ce que**
pendant le balayage, toutes les unités d'émission (S1, S2, S3, S1', S2', S3') d'une baguette d'émission/réception (102, 103) sont tout d'abord activées les unes après les autres, puis, toutes les unités de réception (E1, E2, E3, E1', E2', E3') de cette baguette d'émission/réception (102, 103) sont activées les unes après les autres, ou inversement.

4. Procédé conforme à la revendication 3,
**caractérisé en ce que**
le balayage effectué sur la première baguette d'émission/réception (102) est synchronisé avec le balayage effectué sur la seconde baguette d'émission/réception (103) de sorte que l'un de ces balayages active la première unité d'émission (S1, S1') commandée lorsque l'autre balayage active la première unité de réception (E3', E3) commandée.

5. Grille lumineuse (100, 200) comportant un champ de protection (101) qui est limité par une première baguette d'émission/réception (102) et par une seconde baguette d'émission/réception (103), dans laquelle la première baguette d'émission/réception (102) et la seconde baguette d'émission/réception (103) comportent des unités d'émission et des unités de réception réparties dans au moins deux premiers groupes comprenant au moins une unité d'émission (S1, S1', S2, S2', S3, S3') et dans au moins deux seconds groupes comprenant au moins une unité de réception (E1, E1', E2, E2', E3, E3'), ces groupes étant situés au voisinage les uns des autres et répartis en alternance sur une rangée, ainsi qu'au moins une électronique de commande et d'exploitation (104),
la première baguette d'émission/réception (102) et la seconde baguette d'émission/réception (103) étant en outre positionnées dans l'espace de sorte qu'une unité d'émission (S1, S2, S3) de la première baguette d'émission/réception (102) soit située en regard d'une unité de réception (E3', E2', E1') de la seconde baguette d'émission/réception (103) pour former une paire, et une unité de réception (E1, E2, E3) de la première baguette d'émission/réception (102) étant respectivement située en regard d'une unité d'émission (S3', S2', S1') de la seconde baguette d'émission/réception (103) pour former une paire, et la première baguette d'émission/réception (102) et la seconde baguette d'émission/réception (103) sont en outre conformées de façon à pouvoir effectuer un balayage sur la première baguette d'émission/réception (102) par activation séquentielle des unités d'émission (S1, S2, S3) et des unités de réception (E1, E2, E3) situées sur la première baguette d'émission/réception (102) par au moins une électronique de commande et d'exploitation (104) et à pouvoir effectuer un balayage sur la seconde baguette d'émission/réception (103) par activation séquentielle des unités d'émission (S1', S2', S3') et des unités de réception (E1', E2', E3') situées sur la seconde baguette d'émission/réception (103) par au moins une électronique de commande et d'exploitation (104), cette électronique de commande et d'exploitation (104) étant réalisée de sorte que le balayage effectué sur la première baguette d'émission/réception (102) et le balayage effectué sur la seconde baguette d'émission/réception (103) puissent être synchronisés de sorte que, dans chaque paire, l'unité d'émission (S1, S1', S2, S2', S3, S3') et l'unité de réception (E3, E3', E2, E2', E1, E1') soient activées simultanément à un au moins un instant,
**caractérisée en ce que**
les unités d'émission (S1, S2, S3) de la première baguette d'émission/réception (102) et les unités d'émission (S1', S2', S3') de la seconde baguette d'émission/réception (103) et les unités de réception (E1, E2, E3) de la première baguette d'émission/réception (102) et les unités de réception (E1', E2', E3') de la seconde baguette d'émission/réception (103) sont respectivement interconnectées de façon à définir respectivement sur les baguettes d'émission/réception (102, 103) une première direction (x1) dans laquelle des unités d'émission (S1, S2, S3, S1', S2', S3') se succédant sont activées les unes après les autres,, les groupes d'unités de réception (E1, E2, E3, E1', E2', E3') intermédiaires étant sautés, et que des unités de réception (E3, E2, E1, E3', E2', E1') se succédant de la même baguette d'émission/réception soient activées les unes après les autres dans la seconde direction (x2) opposés à la première, les groupes d'unités d'émission (S1, S2, S3, S1', S2', S3') intermédiaires étant sautés.

6. Grille lumineuse conforme à la revendication 5,
**caractérisée en ce que**
le nombre d'unités d'émission et le nombre d'unités de réception sont identiques.

7. Grille lumineuse conforme à la revendication 5 ou 6,
**caractérisée en ce que**
les unités d'émission (S1, S2, S3) de la première baguette d'émission/réception (102) et les unités d'émission (S1', S2', S3') de la seconde baguette d'émission/réception (103) et les unités de réception (E3, E2, E1) de la première baguette d'émission/réception (102) et les unités de réception (E3', E2', E1') de la seconde baguette d'émission/réception (103) sont respectivement connectées selon une connexion en guirlande.

8. Grille lumineuse conforme à la revendication 7,
**caractérisée en ce que**
dans la première baguette d'émission/réception (102) et dans la seconde baguette d'émission/réception (103), la dernière unité d'émission (S3, S3') de la connexion en guirlande des unités d'émission (S1, S2, S3, S1', S2', S3') est respectivement reliée à la première unité de réception (E3, E3'), de la connexion en guirlande des unités de réception (E3, E2, E1, E3', E2', E1'), ou la dernière unité de réception (E1, E1') de la connexion en guirlande des unités de réception (E3, E2, E1, E3', E2', E1') est respectivement reliée a la première unité d'émission (S1, S1') de la connexion en guirlande des unités d'émission (S1, S1', S2, S2', S3, S3') pour que les connexions en guirlande respectives se chevauchent de sorte que sur chacune des baguettes d'émission/réception (102, 103) il n'y ait respectivement qu'une seule connexion en guirlande.

9. Grille lumineuse conforme à l'une des revendications 5 et 8, **caractérisée en ce que**
la première baguette d'émission/réception (102) et la seconde baguette d'émission/réception (103) ont une structure similaire et comportent respectivement des unités d'émission (S1, S1', S2, S2', S3, S3') et des unités de réception (E1, E2, E3, E1', E2', E3') voisines et situées en alternance sur une rangée.
